# EUROPEAN PATENT APPLICATION

(11) **EP 1 522 724 A1**
(43) Date of publication of application: **13.04.2005**
(21) Application number: 04023439.5
(22) Date of filing: 01.10.2004
(51) Int. Cl.: F03D 1/06

(54) **Rotor for use in a wind turbine and method for making the rotor**

(30) Priority: 06.10.2003 NL 1024463
(71) Applicant: Polymarin Holding B.V., 1671 GC Medemblik (NL)
(72) Inventor: Roorda, Bart, 1721 DJ Broek op Langedijk (NL)
(74) Representative: Uittenbogaart, Gustaaf Adolf

(57) **Abstract**

The invention relates to a rotor for use in a wind turbine with two or more fibre-reinforced plastic vanes and a hub which can rotate about an axis of rotation, the rotatable hub and the plastic vanes being combined to form a component which is composed of walls made from fibre-reinforced plastic. It is preferable for the walls, in any cross section, to be provided with uninterrupted, continuous reinforcing fibres. The invention also comprises a method for making the rotor.

## Description

The invention relates to a rotor in accordance with the preamble of Claim 1. Rotors of this type are known. The drawback of the known rotors is that when the wind turbine is being assembled, the vanes are separately attached to the rotatable metal hub, requiring a long assembly time and making the structure complicated and also susceptible to corrosion on account of the additional connection between the vanes and the rotatable metal hub.

It is an object of the invention to avoid this drawback, and to this end the rotor is designed in accordance with the characterizing clause of Claim 1. The result is a rotor which is simple to assemble and can be mounted in a machine housing of a wind turbine by means of just one joint.

According to a refinement, the rotor is designed in accordance with Claim 2. This means that the rotor is made in one piece and there are no bonded seams between different components of the rotor, with the result that erosion to the bonded seams is avoided and a rotor therefore has a longer service life.

According to a refinement, the rotor is designed in accordance with Claim 3. Coupling the rotor to a rotatable ring with bearing means allows simple and rapid mounting of the rotor.

According to a refinement, the rotor is designed in accordance with Claim 4. This makes the attaching of the vanes or of an assembly of vanes more flexible and allows elastic deformation to occur in the event of sudden gusts of wind, with the result that high stresses are avoided in the structure.

According to a refinement, the rotor is designed in accordance with Claim 5. This facilitates the elastic attachment of the vanes.

According to a refinement, the rotor is designed in accordance with Claim 6. This allows a simple, lightweight and robust structure to be achieved in which optimum use is made of the structural elements which are present.

According to a refinement, the rotor is designed in accordance with Claim 7. This ensures that the torque which is exerted on the hub by the wind via the vanes can readily be transmitted to the following vane, allowing the structure to be of simpler design.

According to a further refinement, the rotor is designed in accordance with Claim 8. This results in a compact design of the vanes.

According to a further refinement, the rotor is designed in accordance with Claim 9. The result is a generator which is simple to assemble with a more lightweight structure and lower production costs.

The invention also relates to a method in accordance with the preamble of Claim 10. According to this known method, a rotor is constructed by constructing the rotatable hub together with the vanes. The drawback of this method is that the rotor has to be constructed from separate components which have large dimensions and have to be transported separately, which is expensive.

To avoid this drawback, the method is carried out in accordance with the characterizing clause of Claim 10. As a result, the rotor is assembled near to the wind turbine from components which are simple to transport, to form a component which is mounted as a single unit, thereby reducing transport costs. Also, there are no joining seams, which means that the rotor is less susceptible to corrosion and/or erosion.

According to a refinement, the method is carried out in accordance with Claim 11. Consequently, the assembled rotor only has to be transported a limited distance and only materials and the mould have to be transported to a location close to the assembly site where the rotor is mounted on the wind turbine.

According to a refinement, the method is carried out in accordance with Claim 12. Consequently, the number of large components which has to be transported to the construction site is limited, thereby simplifying transportation.

According to a refinement, the method is carried out in accordance with Claim 13. This simplifies production of the rotor and ensures that the mould is completely filled with the curable plastic.

According to a refinement, the method is carried out in accordance with Claim 14. The plastic is heated as a result of heat being generated during curing of the plastic. Since locally great wall thicknesses of the plastic are required when making the rotor, the plastic may locally become too warm, with the result that, as it were, it burns. This is prevented by dissipating the heat which is generated.

According to a refinement, the method is carried out in accordance with Claim 15. This makes it easy to ensure that the curing reaction can take place at a sufficiently high temperature and at the same time ensures that the temperature does not become too high as a result of the curing reaction, such that the curing plastic would become burnt.

The invention is explained below on the basis of an exemplary embodiment and with reference to a drawing, in which:
Figure 1 shows a view of a wind turbine with a rotor according to the invention,
Figure 2 shows a perspective cross section through a vane of the rotor of the wind turbine shown in Figure 1,
Figure 3 shows a side view of the rotor of the wind turbine from Figure 1,
Figure 4 shows a side view of a mould for producing the rotor shown in Figure 3,
Figure 5 shows a cross section V-V through the mould shown in Figure 4,
Figure 6 shows a cross section perpendicular to the axis of rotation of the rotor shown in Figure 3, partly through the cylindrical part of the rotor and partly through a vane bar of a vane as indicated by VI-VI in Figure 7,
Figure 7 in part shows a cross section VII-VII as indicated in Figure 6 and in part shows a view of the cylindrical part of the rotor, and
Figure 7A shows detail A from Figure 7.

Throughout the various figures, corresponding components are always denoted by the same reference numeral.

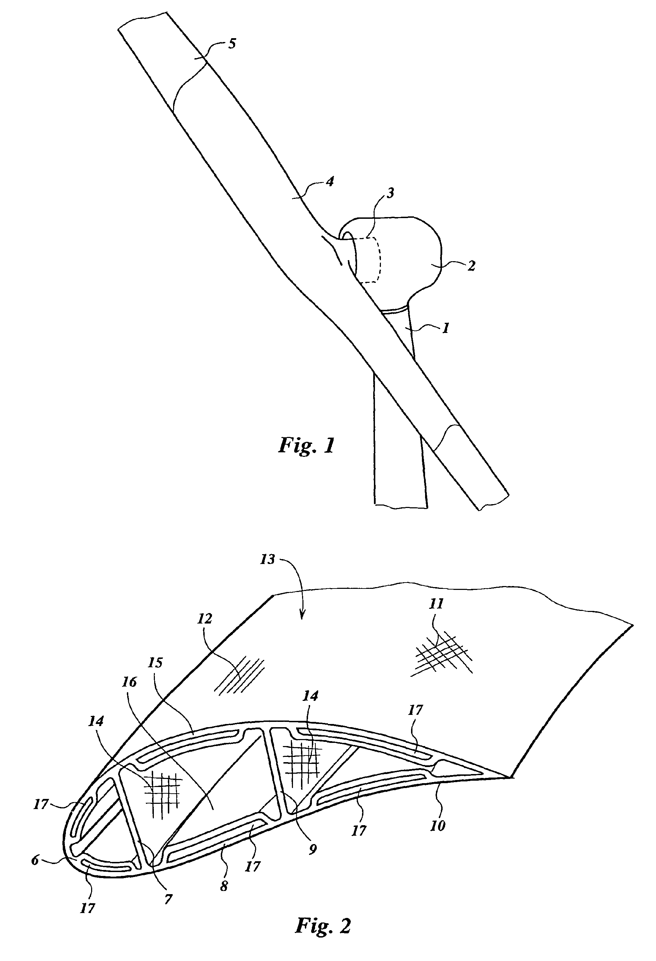

Figure 1 shows a wind turbine having a tower 1 on which a machine housing 2 is fixed. A rotor 4 is rotatably attached inside the machine housing 2, for which purpose the rotor 4 is provided with a cylindrical rotor mount 3. The rotor 4 can rotate about a more or less horizontal axis. The machine housing 2 can rotate about a vertical axis so that the rotor 4 can be adjusted to match the wind direction. The rotor 4 is provided with two profiled vanes 5. After the axis of rotation of the rotor 4 has been directed to match the wind as a result of the machine housing 2 being rotated about the vertical axis of rotation, the rotor 4 will start to rotate about its horizontal axis of rotation. The rotor 4 is coupled to a generator in a known way which is to be described below, so that electrical energy is generated in the wind turbine.

The profiled vanes 5 are designed in such a manner that the efficiency of the profiled profile decreases significantly if the wind speed becomes too high for the rotational speed of the rotor 4 at that moment. As a result of this decrease in efficiency, the torque which is generated by the rotor 4 does not increase any further as the wind speed increases, on account of the rotational speed of the rotor 4 being limited by the generator. The angle at which the greater wind speed flows on to the vane 5 then becomes insufficiently favourable, with the result that turbulence starts to occur along the profile and the rotating torque on the rotor 4 does not increase. The result is that the rotational speed of the wind turbine does not increase further as the wind speed increases, and the rotor 4 can operate without adjustable vanes 5.

The rotor 4 is constructed as an undivided structure in which the profiled vanes 5, which are made from plastic, are joined without interruption to the cylindrical rotor mount 3 and to the following vane 5. Figure 1 shows a wind turbine in which the rotor 4 has two vanes 5, but the design can be used in a corresponding way if the rotor 4 is composed of three or more profiled vanes 5.

By virtue of the fact that the rotor 4 has an undivided structure, all the vanes are attached to the machine housing 2 simultaneously, and consequently the mounting time can be shortened. Since mounting of the rotor 4 has to take place at a great height, expensive hoist means have to be used. In this context, it is important to minimize the mounting time, which can be achieved by using the undivided structure. The rotor 4 is made as a complete component in a single curing cycle and there is no need for adhesive and/or joining seams. Consequently, the fibres in the plastic are at no stage interrupted by such seams, and consequently the structure can be of more lightweight design. Moreover, the absence of joining seams between the vanes 5 and the remainder of the rotor 4 and also within components of the vanes 5 limits the risk of damage by erosion to the bonding and/or joining seams, which is advantageous under conditions with a corrosive environment, such as when wind turbines are erected near the coast or at sea and/or in the case of components which are exposed to a high air speed, which also occurs more frequently in the case of wind turbines erected at sea.

Figure 2 shows the structure of the vane 5 of the rotor 4. The rotor 4 and also the vane 5 are made from fibre-reinforced epoxy. A vane profiled section 13 is composed of a box section 16 having a top flange 15 and a bottom flange 8, which are coupled by a front longitudinal partition 7 and a rear longitudinal partition 9. The box section 16 is responsible for providing strength to the vane 5, and for this purpose longitudinal fibres 12, for example glass fibres or other reinforcing fibres known to the person skilled in the art, including carbon fibres or aramid fibres, are arranged in the top flange 15 and the bottom flange 8 of the box section 16. Crossing fibres 14 are arranged as reinforcement in the epoxy of the front longitudinal partition 7 and the rear longitudinal partition 9 of the box section 16. A front profiled section 6 is arranged at the leading edge of the box section 16, and a rear profiled section 10 is arranged at the trailing edge of the box section 16. The top flange 15 and the bottom flange 8, together with the front profiled section 6 and the rear profiled section 10, form the streamline vane profiled section 13. Fibres are likewise arranged as reinforcement in the epoxy of the front profiled section 6 and the rear profiled section 10, for example as crossing fibres 11 or, in a manner which is not shown, as short, randomly arranged fibres. A sandwich structure 17, which is to be described in more detail below, is used at the larger profile surfaces and in any event at surfaces which are not curved or are only slightly curved, in order to make the outer surface of the vane profiled section 13 sufficiently strong. To further reinforce the vane profiled section 13, it is also possible for transverse partitions (not shown) to be arranged at fixed intervals over the length of the profiled vane 5 across the entire cross section. It will be clear that as an alternative to a box section 16 having a front longitudinal partition 7 and a rear longitudinal partition 9, it is also possible to use structures with one or three longitudinal partitions. It is also possible for the number of longitudinal partitions to vary over the length of the vane 5, in which case, by way of example, the end of the vane 5 has one longitudinal partition, two longitudinal partitions as shown in Figure 2 are present in the middle of the vane 5 and three longitudinal partitions are present in the vicinity of the root of the vane 5.

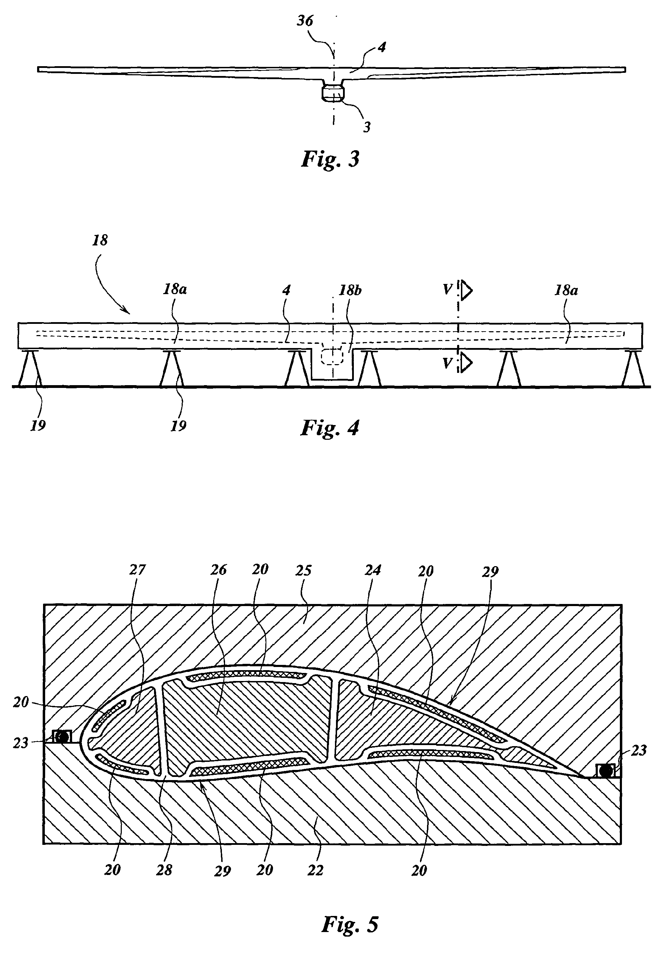

Figure 3 shows the rotor 4 with the cylindrical rotor mount 3, which is produced as a single component. The diameter of the rotor 4 may amount to tens of metres, for example in the case of a tower 1 with a height of 60 metres, the diameter of the rotor 4 may be from 60 to 100 metres. Even rotors with a diameter of 150-200 metres are possible. Therefore, it is preferable for the rotor 4 to be made near to the location of the tower 1, so that the rotor 4 can be transported to the tower 1 without problems. If appropriate, the distance between the location at which the rotor 4 is produced and the tower 1 may be greater if the rotor 4 can be taken to the tower 1 without encountering obstacles, for example by being transported by water.

Figure 4 shows a mould 18 in which the rotor 4 is produced as a single component. The mould 18 in this case comprises a profiled-section mould 18a for making the vane profiled section 13 and a centre mould 18b for making a connection between the vanes 5 and the cylindrical rotor mount 3. The mould 18 is composed of separate components which are assembled at the site at which the rotor 4 is produced and are removed after the epoxy resin has cured and if appropriate reused for a subsequent rotor 4. There are introduction openings (not shown) arranged at various locations in the mould to allow the epoxy resin to be introduced into the mould 18, and there are also connections (not shown) for discharging air which is present in the mould. If appropriate, the interior of the mould 18, before or during introduction of the epoxy into the mould 18, is placed under a vacuum and/or the epoxy is forced into the mould 18 under a superatmospheric pressure.

Figure 5 shows the interior of the profiled-section mould 18a. The profiled-section mould 18a is composed of a bottom half 22 and a top half 25, which are clamped together, in a manner which is not shown, and are sealed with respect to one another by a seal 23. The inner side of the profiled-section mould 18a comprises a profiled surface 29 which will form the outer wall of the surface of the profiled vane 5 and therefore corresponds to the vane profiled section 13. The reinforcing fibres (the dry bottom laminate) and reinforcing elements 20 of the sandwich structure 17 are arranged in the bottom half 22 of the cavity formed by the profiled surface 29. The reinforcing elements 20 may consist of PVC foam, balsa wood or honeycomb and serve to strengthen the skin areas. In Figure 5, the top flange 15 and the bottom flange 8 are also shown as sandwich structures. These supporting parts of the box section 16 are often made from solid laminate with strong fibres. Then, a front core 27, a middle core 26 and a rear core 24 are successively put in place. Then, reinforcing fibres (the dry top laminate) and if appropriate reinforcing elements are likewise arranged on top of the cores 24, 26 and 27, after which the mould 18 is closed by means of the top half 25. The cores 24, 26 and 27 are positioned in such a manner that fibre-filled cavities 28 remain between the mould 18 and the cores 24, 26 and 27. After the epoxy resin which is to be cured has been introduced, these cavities are to form the walls and partitions of the vane surface 13 of the rotor 4. For this purpose, the shape of the cores 24, 26 and 27 is matched to the shape of the profile surface 29, so that a more or less constant wall thickness is produced. The length of the cores 24, 26 and 27 is determined by the distance between any transverse partitions. The mould 18 is constructed in a corresponding way at the location of the centre part.

To improve the strength of the cured plastic, prior to introduction of the plastic the mould 18 is heated uniformly to a temperature of, for example, 60° Celsius. This heating can be effected, inter alia, by arranging circulation lines (not shown), through which heated liquid flows, in the mould 18. It is also possible for the mould 18 to be heated in other ways or for electrical heating wires to be arranged in the cavities 28.

Since the strength of the plastic rotor 4 is to a significant extent determined by the fibres arranged in the epoxy, these fibres are established and arranged in the cavities 28 with the aid of suitable calculations. It is possible to deviate from the positioning and direction of the fibres given above. If continuous fibres are indicated for the purpose of transmitting forces, it is also possible to use shorter fibres, in which case the forces are transmitted from the fibre to following fibres as a result of an overlapping arrangement. The fibres may also be arranged as bundles or combined to form mats, thereby simplifying positioning in the mould 18. If the quantity of fibres increases in order to achieve the required strength, this will also result in an increasing wall thickness, which is therefore also dependent on the local load in the rotor 4. For example, in the case of a rotor 4 with a diameter of 60 metres, the wall thickness at the end of the vanes 5 will be approximately 5 to 10 millimetres, whereas the wall thickness of the structure in the vicinity of and within the hub 3 may be from 40 to 80 millimetres.

When the epoxy resin is curing, heat is generated and is dissipated through the mould 18. If great wall thicknesses are used, there is a risk of the curing epoxy resin becoming too hot on account of this generation of heat, for example of the resin reaching temperatures above 120° Celsius, leading to local burning of the resin. To avoid this, the mould can be cooled by using the abovementioned circulation lines for preheating the mould 18 also for dissipating the generated heat of reaction. Heating and cooling also accelerates the curing process, leading to lower production costs.

The person skilled in the art is familiar with various solutions for removing the cores 24, 26 and 27 from the rotor 4 after the epoxy has cured. One of these solutions is for the cores 24, 26 and 27 to be made from a material in powder form and for this material to be packaged in a flexible film. The core is made into the desired shape by the film-packed material being introduced into a mould. Once the desired shape has been obtained, a vacuum is introduced into the film, with the result that the film holds the material pressed together in the desired shape and a stable core is obtained. After the epoxy has cured, the vacuum inside the film is interrupted and the material in powder form can be removed from the rotor, for example by being sucked out using a vacuum cleaner. If appropriate, the hollow spaces in the rotor 4 are filled with plastic foam after the cores have been removed. As an alternative to the removable cores 24, 26 and 27 described above, it is also possible to opt for lost cores which remain in the rotor 4 after curing; these cores are made, for example, from foam.

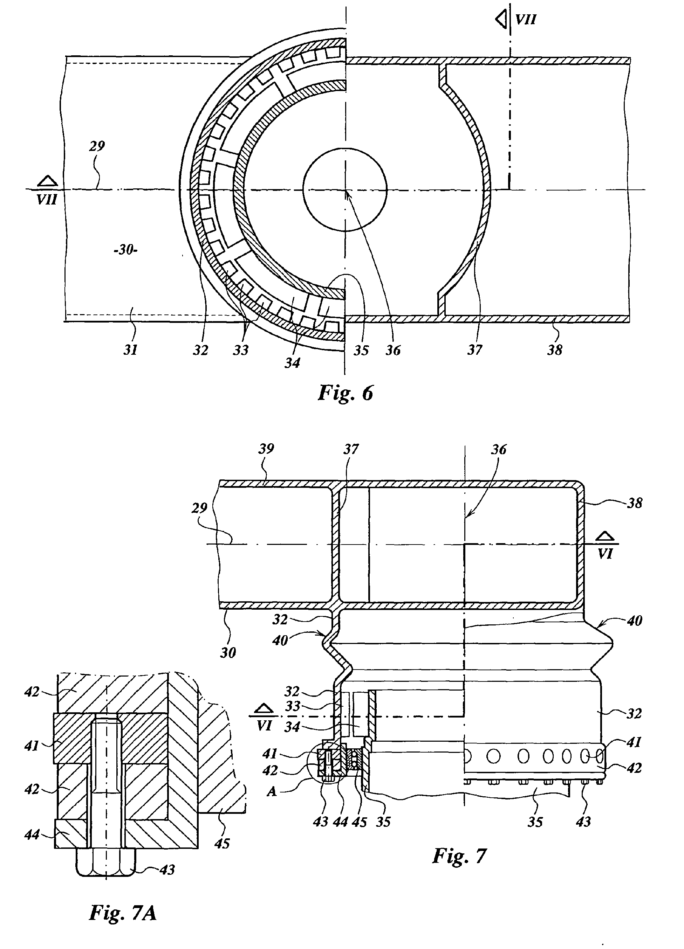

Figure 6 shows a cross section and partial view perpendicular to an axis of rotation 36 of the rotor 4 at the location of the cylindrical rotor mount 3. The profiled vanes 5 are coupled to one another and to a cylindrical shell 32 by a vane bar 31. The vane bar 31 has a centre axis 29, and Figure 7 shows a cross section through the axis of rotation 36 and the vane centre axis 29, and also partially a view of the cylindrical shell 32. The vane bar 31 has a front surface 39 which continues without interruption from one vane 5 to the next vane 5 and at the vanes adjoins the top flange 15 of the vane profiled section 13. The side walls 38 of the vane bar 31 likewise run continuously from one vane 5 to the following vane 5 and adjoin the front longitudinal partition 7 and the rear longitudinal partition 9. The longitudinal fibres 12 in the top flange 15 continue into the front surface 39, and the crossing fibres 14 in the partitions 7 and 9 continue into the side walls 38, thereby ensuring a lightweight and strong construction. Some of the crossing fibres in the side walls 38 of the vane bar 31 continue to the cylindrical wall 32 and transmit the torque generated by the rotor 4 to the cylindrical wall 32. For further reinforcement, a supporting partition 32 is arranged in the vane bar 31 at the location of the cylindrical wall 32. It will be clear that in exemplary embodiments in which the vane 5 has one or three longitudinal partitions in the vicinity of the root, the vane bar 31 then has a profile which is such that the longitudinal partition(s) adjoin(s) the vane bar 31.

As can be seen in more detail from Figure 7A, the cylindrical wall 32, at the end remote from the vane bar 31, ends in a thickened coupling flange 32 which is accurately secured around a steel coupling ring 44. Steel projections 41 are secured in holes in the coupling flange 42, with a bolt 43, which is supported against the coupling ring 44 and thereby pulls the coupling flange 42 on to the coupling ring 44, being mounted in each steel projection 41. The coupling ring 44 is mounted around a bearing 45 which is mounted around a stationary stator sleeve 35. Instead of using the separate coupling ring 44, it is also possible for the latter to form part of the bearing 45.

The stator sleeve 35 is mounted in the machine housing 2 (cf. Figure 1), and stator coils 34, which interact with permanent magnets 33 mounted on the inner side of the cylindrical wall 32, are mounted on the stator sleeve 35. The stator coils 34 and the permanent magnets 33 together form a generator in which the rotary mechanical energy generated by the vanes 5 is converted into electrical energy. The design of the generator is in this case given as an example. It is known to the person skilled in the art that other solutions are possible in this context.

A diagrammatically indicated flexible part 40 is arranged in the cylindrical wall 32 in the vicinity of the vane bar 31. The flexibility in the flexible part 40 can be produced by a modified shape, such as shown in Figure 7. In another embodiment, the shape of the cylindrical wall 32 can remain cylindrical, and the flexibility is imparted by adapting the positioning and direction of the reinforcing fibres. The flexible part 40 is designed in such a manner that the rotary torque generated by the vanes 5 is transmitted to the generator without any play or additional elasticity. In this context, it is sufficiently flexible for it to be possible for the direction of the centre axis 29 of the vane bar 31 to move elastically through a small angle into and just through the centre axis 36. As a result, the vanes 5 can move slightly under the influence of gusts of wind without high loads thereby being imparted to the bearing 45. This improves the service life of the bearing 45 and reduces the risk of high stresses occurring in the structure. The flexible part 40 may also be arranged in the vane bar 31 rather than in the cylindrical wall 32. If appropriate, a flexible part 40 may be arranged in both structural parts 31 and 32.

## Claims

1. Rotor for use in a wind turbine, comprising two or more vanes (5) composed of fibre-reinforced plastic, and a hub, which can rotate about an axis of rotation (36) and to which the vanes are attached, **characterized in that** the rotatable hub (3) and the two or more vanes (5) are combined to form a component which is composed of walls made from fibre-reinforced plastic.

2. Rotor according to Claim 1, in which the walls, in every cross section, are provided with uninterrupted, continuous reinforcing fibres (11, 12, 14).

3. Rotor according to Claim 1 or 2, in which the rotatable hub has a cylindrical shell (32) with a centre axis (36) which corresponds to the axis of rotation of the rotor, which cylindrical shell is provided with coupling means (41, 43) for coupling the rotor (4) to a mounted and rotatable ring (44).

4. Rotor according to Claim 1, 2 or 3, in which the wall by which one or more vanes (5) are attached to the rotatable hub (3) is/are designed in a such a manner that the vanes are elastically attached to the rotatable hub.

5. Rotor according to Claim 4, in which a wall made from fibre-reinforced plastic is provided with a flexible part (40) all the way around.

6. Rotor according to one of the preceding claims, which has vanes which comprise a box profiled section (16), and the box profiled section of a vane is extended, towards the centre (36) of the rotor, by a vane bar (31) which adjoins a corresponding vane bar (31) of the other vane(s).

7. Rotor according to Claim 6, in which reinforcing fibres (12), which run continuously from a first vane to a following vane, are incorporated in an outer wall of the box profiled section (16) and/or the vane bar (31).

8. Rotor according to Claim 6 or 7, in which the vanes (5) are provided with an aerodynamic vane profiled section (13) and the box profiled section (16) has an outer wall, of which a part (8, 17) is incorporated in the vane profiled section.

9. Rotor according to one of the preceding claims, in which the rotatable hub has a cylindrical shell (32) with permanent magnets (33) on the inner circumference or the outer circumference of the cylindrical shell, which permanent magnets, together with stator coils (24), form a generator.

10. Method for making a rotor (4) for a wind turbine composed of a rotatable hub and profiled vanes, **characterized in that** the rotor is made by introducing cores (24, 26, 27), reinforcing fibres (11, 12, 14) and any other filler material (20) into a mould (18) for all the vanes (5) and the rotatable hub (3), and then, after the mould has been closed, filling all the remaining spaces (28) in the mould with a curable plastic.

11. Method according to Claim 10, in which the mould (18), during curing, is positioned close to an assembly site for the wind turbine.

12. Method according to Claim 10 or 11, in which the mould (18) is composed of separate components which are put together in the vicinity of an assembly site for the wind turbine.

13. Method according to Claim 10, 11 or 12, in which the mould is filled by applying a subatmospheric pressure to the interior spaces (28) of the mould and/or introducing the liquid plastic into the interior spaces under a superatmospheric pressure, after which the curable plastic can fill the interior spaces under the influence of pressure differences.

14. Method according to Claim 10, 11, 12 or 13, in which heat which is evolved during curing is dissipated.

15. Method according to Claim 10, 11, 12, 13 or 14, in which the mould is provided with a circulation passage for liquid, and the mould, in order for the plastic which is to be cured to be introduced, is heated by heated liquid being circulated within the circulation passage, and during curing of the plastic heat is dissipated by liquid being circulated within the circulation passage.
